# EUROPÄISCHE PATENTSCHRIFT

(11) **EP 2 160 278 B1**
(45) Veröffentlichungstag und Bekanntmachung des Hinweises auf die Patenterteilung: **17.08.2011**
(21) Anmeldenummer: 08759138.4
(22) Anmeldetag: 10.06.2008
(51) Int. Cl.: B29C 47/00, C08J 3/20, C08J 5/00

(54) **VERFAHREN ZUR HERSTELLUNG EINES LEITFÄHIGEN POLYMERVERBUNDWERKSTOFFS**
METHOD FOR THE PRODUCTION OF A CONDUCTIVE POLYMER COMPOSITE MATERIAL
PROCÉDÉ DE FABRICATION D'UN MATÉRIAU COMPOSITE POLYMÈRE CONDUCTEUR

(30) Priorität: 23.06.2007 DE 102007029008
(43) Veröffentlichungstag der Anmeldung: 10.03.2010
(73) Patentinhaber: Bayer MaterialScience AG, 51368 Leverkusen (DE)
(72) Erfinder: BIERDEL, Michael, 51373 Leverkusen (DE); BUCHHOLZ, Sigurd, 50767 Köln (DE); MICHELE, Volker, 51065 Köln (DE); MLECZKO, Leslaw, 41542 Dormagen (DE); RUDOLF, Reiner, 51373 Leverkusen (DE); WOLF, Aurel, 42489 Wülfrath (DE)
(86) Internationale Anmeldenummer: PCT/EP2008/004611
(87) Internationale Veröffentlichungsnummer: WO 2009/000408

(56) Entgegenhaltungen:
- WO-A-01/92381
- WO-A-2005/014259
- WO-A-2006/096203
- WO-A-2007/100573

## Beschreibung

Die Erfindung betrifft ein Verfahren zur Herstellung eines elektrisch leitfähigen Polymerverbundwerkstoffs mit vermindertem Oberflächenwiderstand auf Basis von thermoplastischen Polymeren und Kohlenstoffnanoröhrchen, bei dem eine Kohlenstoffnanoröhrchen-Polymerschmelze-Mischung in einem doppelwelligen Schneckenextruder dispergiert und anschließend extrudiert wird. Die Kohlenstoffnanoröhrchen werden im Folgenden abkürzend als "CNT" bezeichnet.

Ein vergleichbares Verfahren ist prinzipiell bekannt aus WO 2005/014259 A1. Hiernach wird eine CNT-Polymermischung im Batchbetrieb in einem Mini-Doppelschneckenextruder mit gleichlaufenden, konischen Wellen und einem Rückflusskanal vermischt und nach mehrfachem Durchlaufen des Extruders extrudiert. Das Verfahren eignet sich nur für den Labormaßstab, die verarbeiteten Mengen betragen 4-15 Gramm. Eine Übertragung in den industriellen Maßstab (d.h. einem Durchsatz im Bereich von Tonnen pro Stunde) ist nicht möglich oder zumindest äußerst schwierig, da die zu Grunde liegenden Apparate für einen kontinuierlichen Betrieb im großtechnischen Betrieb nicht geeignet sind. Die Dispergierung der CNT erfolgt hierbei im wesentlichen durch hydrodynamische Kräfte.

In WO 2001/092381 A1 wird ein Verfahren beschrieben, bei dem eine CNT-Polymermischung hergestellt wird, wobei die Dispergierung der CNT in der Polymerschmelze durch hydrodynamische Kräfte erfolgt. Das Verfahren kann in einem Extruder, einem Rheometer oder einer Faserspinnvorrichtung ausgeführt werden.

Der Erfindung liegt die Aufgabe zu Grunde, stark verknäuelte CNT-Agglomerate mit einem mittleren Durchmesser von 0,5 - 2 mm, wie sie z.B. nach WO 2006/050903 A2 durch katalytische Gasphasenabscheidung erhalten werden, in einer Polymerschmelze zu dispergieren und die CNT zu vereinzeln und derart homogen in einem Polymer zu verteilen, dass die CNT ein dreidimensionales, elektrisch leitendes Netzwerk im Polymer bilden. Insbesondere soll das Verfahren zur Dispergierung von mehrwandigen Kohlenstoffnanoröhrchen (Multiwalled Carbon Nanotubes; kurz als MWNT bezeichnet) geeignet sein. Weiterhin sollte das Verfahren problemlos für Durchsätze im industriellen Maßstab modifizierbar (anwendbar) sein, d.h. auf großen Durchsatz im Tonnenmaßstab skalierbar sein.

Diese Aufgabe wird, ausgehend von dem eingangs beschriebenen Verfahren, erfindungsgemäß dadurch gelöst, dass thermoplastisches Polymer in fester Phase zusammen mit den Kohlenstoffnanoröhrchen (CNT) dem Haupteinzug eines doppelwelligen Gleichdrall-Schneckenextruders oder eines Ringextruders oder eines Planetwalzenextruders oder Ko-Kneters mit nicht konischen Wellen zugeführt wird, und die CNT in der Einzugszone durch Feststoffreibung unter Bildung einer Feststoffmischung vordispergiert werden, dass das Polymer bzw. die Polymere in einer darauf folgenden Aufschmelzzone aufgeschmolzen werden sowie die CNT in dieser Aufschmelzzone überwiegend durch hydrodynamische Kräfte weiter dispergiert werden und in weiteren Zonen in der Polymerschmelze homogen verteilt werden.

Die Dispergierung der MWNT allein durch Anwendung hydrodynamischer Kräfte, wie in WO 2001/092381 A1 beschrieben, war für die aus dem katalytischen Gasphasenprozess erhaltenen MWNT nicht erfolgreich.

In einem bevorzugten Verfahren wird der spezifische mechanische Energieeintrag im Schneckenextruder auf einen Wert im Bereich von 0,1 kWh/kg bis 1 kWh/kg, bevorzugt von 0,2 kWh/kg bis 0,6 kWh/kg und die minimale Verweilzeit auf einen Wert im Bereich von 6 s bis 90 s, bevorzugt 8 s bis 30 s eingestellt.

Es wurde erwartet, dass mit zunehmendem Energieeintrag die CNT zwar besser vereinzelt werden, die Länge der CNT aber stetig abnimmt. Da die elektrische Leitfähigkeit nach der allgemeinen Theorie mit sinkendem Länge/Durchmesser - Verhältnis (L/D Verhältnis) abnimmt - bei konstantem CNT-Gehalt und Dispergiergrad -, sollte sie mit steigendem Energieeintrag zunächst steigen wegen der besseren Vereinzelung der CNT, dann aber auf Grund des geringer werdenden L/D - Verhältnisses der CNT wieder sinken. Überraschenderweise wurde aber gefunden, dass auch bei hohem Energieeintrag die elektrische Leitfähigkeit nicht wieder absinkt.

Das erfindungsgemäße Verfahren bietet den Vorteil, dass sich in wirtschaftlich effizienter Weise CNT-Polymerverbundwerkstoffe mit homogen in der Polymermatrix verteilten CNT und hoher elektrischer Leitfähigkeit, hoher Wärmeleitfähigkeit und sehr guten mechanischen Eigenschaften im industriellen Maßstab herstellen lassen.

Bevorzugt werden in dem neuen Verfahren mehrwandige (multiwalled) Kohlenstoffnanoröhrchen verwendet.

Besonders bevorzugt werden Kohlenstoffnanoröhrchen mit einem Verhältnis von Länge zu Außendurchmesser von größer 5, bevorzugt größer 100 verwendet.

Die Kohlenstoffnanoröhrchen werden besonders bevorzugt in Form von Agglomeraten eingesetzt, wobei die Agglomerate insbesondere einen mittleren Durchmesser im Bereich von 0,5 - 2 mm haben. Ein weiter bevorzugtes Verfahren, ist dadurch gekennzeichnet, dass die Kohlenstofkanoröhrchen einen mittleren Durchmesser von 3 bis 100 nm, bevorzugt 3 bis 80 nm, aufweisen.

Die aus der WO 2006/050903 A2 bekannt gewordenen CNT werden besonders bevorzugt im neuen Verfahren eingesetzt.

Als thermoplastisches Polymer wird bevorzugt wenigstens eines aus der Reihe Polycarbonat, Polyamid, Polyester, insbesondere Polybutylenterephthalat und Polyethylenterephthalat, Polyether, thermoplastisches Polyurethan, Polyacetal, Fluorpolymer, insbesondere Polyvinylidenfluorid, Polyethersulfone, Polyolefin, insbesondere Polyethylen und Polypropylen, Polyimid, Polyacrylat, insbesondere Poly(methyl)methacrylat, Polyphenylenoxid, Polyphenylensulfid, Polyetherketon, Polyaryletherketon, Styrolpolymerisate, insbesondere Polystyrol, Styrolcopolymere, insbesondere Styrolacrylnitrilcopolymer, Acrylatkautschuk (ASA), Acrylnitrilbutadienstyrolblockcopolymere und Polyvinylchlorid eingesetzt.

Gegenstand der Erfindung ist ferner ein Kohlenstoffnanoröhrchen-Polymerverbundwerkstoff erhalten aus dem erfindungsgemäßen Verfahren.

Gegenstand der Erfindung ist auch die Verwendung des nach dem erfindungsgemäßen Verfahren erhaltenen Kohlenstoffnanoröhrchen-Polymerverbundwerkstoffs zur Herstellung von Formkörpren.

Im Folgenden wird die Erfindung an Hand von Ausführungsbeispielen und Zeichnungen näher erläutert. Es zeigen
- Fig. 1: ein Verfahrensschema einer Anlage zur Durchführung des Verfahrens
- Fig. 2: eine schematische Längsschnittdarstellung des in der Anlage nach Fig. 1 verwendeten Doppelschneckenextruders
- Fig. 3: eine Messanordnung zur Bestimmung des elektrischen Oberflächenwiderstandes der CNT- Polymerverbundwerkstoffe

### Beispiele

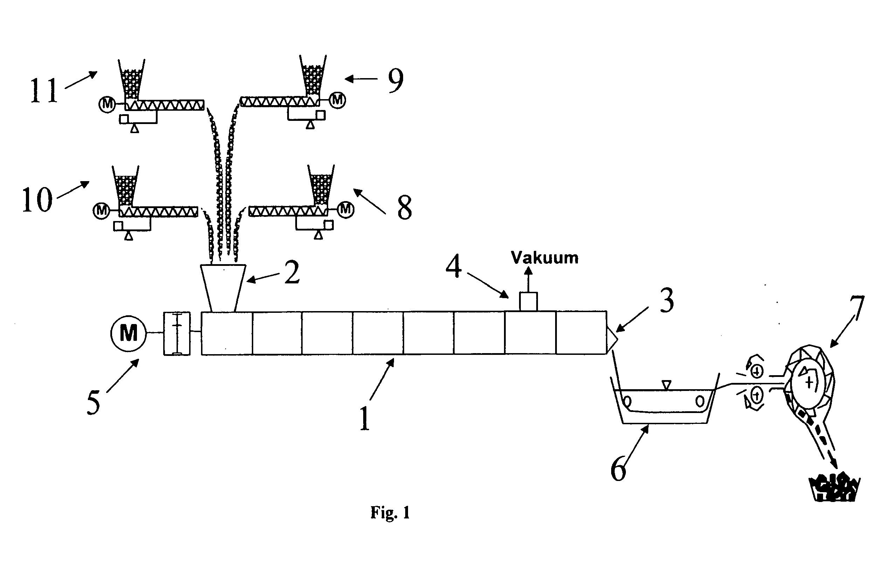

Die Anlage gem. Fig. 1 besteht im Kern aus einem Doppelwellenschneckenextruder 1 mit einem Einfülltrichter 2, einem Produktaustrag 3 und einem Entgasungsstutzen 4. Die beiden gleichsinnig rotierenden Schneckenwellen (nicht gezeigt) des Extruders 1 werden von dem Motor 5 angetrieben. Die Bestandteile des Kohlenstoffnanoröhrchen-Polymerverbundwerkstoffes (Polymer 1, Additive (z.B. Antioxidantien, UV-Stabilisatoren, Entformungsmittel), CNT, gegebenenfalls Polymer 2) werden über Dosierschnecken 8 - 11 in den Einzugstrichter 2 des Extruders 1 gefördert. Die aus der Düsenplatte 3 austretenden Schmelzestränge werden in einem Wasserbad 6 abgekühlt und erstarrt und anschließend mit einem Granulator 7 zerkleinert.

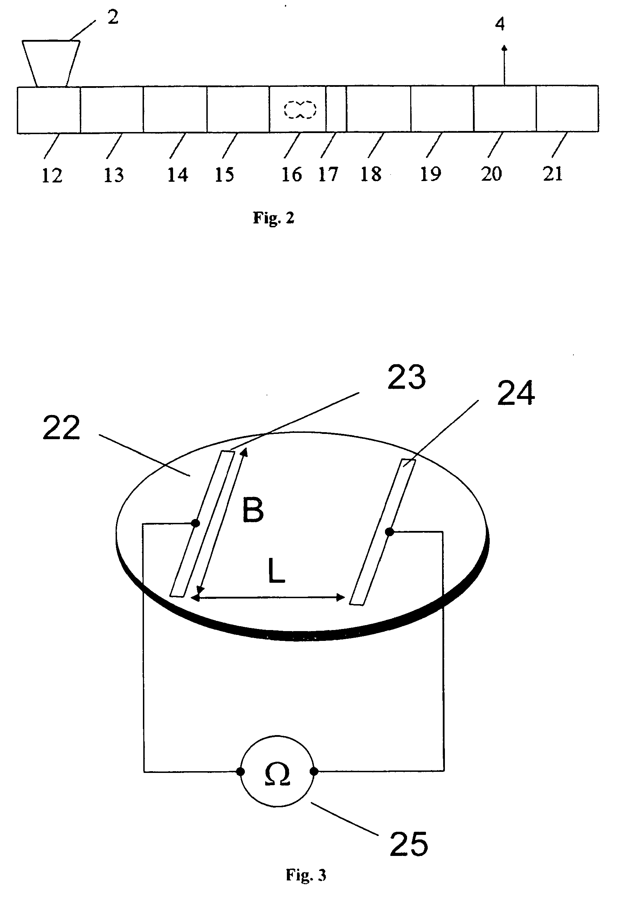

Der Doppelschneckenextruder 1 (siehe Fig. 2) weist unter anderem ein aus zehn Teilen bestehendes Gehäuse auf, in welchem zwei gleichsinnig rotierende, miteinander kämmende Schneckenwellen (nicht gezeigt) angeordnet sind. Die zu compoundierenden Komponenten inkl. der CNT-Agglomerate werden dem Extruder 1 über den am Gehäuseteil 12 angeordneten Einzugstrichter 2 zugeführt.

Im Bereich der Gehäuseteile 12 bis 13 befindet sich eine Einzugszone, welche vorzugsweise aus Gewindeelementen mit einer Gangsteigung von 2 mal dem Schneckenwellen-Durchmesser (kurz: 2 D) bis 0,9 D besteht. Durch die Gewindeelemente werden die CNT-Agglomerate zusammen mit den anderen Bestandteilen des Kohlenstoffnanoröhrchen-Polymerverbundwerkstoffes zur Aufschmelzzone 14, 15 hin gefördert und die CNT-Agglomerate dabei durch Reibkräfte zwischen dem in fester Phase befindlichen Polymergranulat und dem ebenfalls in fester Phase befindlichen CNT-Pulver intensiv durchmischt und vordispergiert.

Im Bereich der Gehäuseteile 14 bis 15 befindet sich die Aufschmelzzone, welche vorzugsweise aus Knetblöcken besteht; es kann auch alternativ - abhängig vom Polymer - eine Kombination aus Knetblöcken und Zahnmischelementen verwendet werden. In der Aufschmelzzone 14, 15 werden die polymeren Bestandteile aufgeschmolzen und die vordispergierten CNT und Additive weiter dispergiert und intensiv mit den übrigen Verbundwerkstoff-Komponenten vermischt. Die Beheizungstemperatur des Extrudergehäuses im Bereich der Aufschmelzzone 14, 15 wird auf einen Wert eingestellt, der größer ist als die Schmelztemperatur des Polymeren (bei teilkristallinen Thermoplasten) bzw. die Glasübergangstemperatur (bei amorphen Thermoplasten).

Im Bereich der Gehäuseteile 16 bis 19 ist im Anschluss an die Aufschmelzzone 14, 15 zwischen den Förderelementen der Schneckenwellen eine Nachdispergierzone vorgesehen. Sie weist Knet- und Mischelemente auf, welche eine häufige Umlagerung der Schmelzeströme und eine breite Verweilzeitverteilung bewirken. Auf diese Weise wird eine besonders homogene Verteilung der CNT in der Polymerschmelze erzielt. Sehr gute Ergebnisse wurden mit Zahnmischelementen erreicht. Weiterhin können zum Einmischen der CNT auch Schneckenmischelemente, Exzenterscheiben, Rückförderelemente etc. verwendet werden. Es können alternativ auch mehrere Nachdispergierzonen hintereinander geschaltet werden, um die Feindispergierung zu intensivieren. Wichtig für die Erzielung einer möglichst gleichmäßigen CNT-Verteilung im Polymer ist in jedem Fall die Kombination der Vordispergierung in fester Phase, der Hauptdispergierung beim Aufschmelzen des Polymers/der Polymere und der nachgeschalteten Feindispergierung, die in der flüssigen Phase stattfindet.

Die Entfernung von flüchtigen Substanzen erfolgt in einer Entgasungszone in Gehäuseteil 20 über eine Entgasungsöffnung 4, welche an eine Absaugvorrichtung (nicht gezeigt) angeschlossen ist. Die Entgasungszone besteht aus Gewindeelementen mit einer Gangsteigung von mindestens 1 D.

Das letzte Gehäuseteil 21 enthält eine Druckaufbauzone, an deren Ende das compoundierte und entgaste Produkt aus dem Extruder austritt. Die Druckaufbauzone 21 weist Gewindeelemente mit einer Gangsteigung zwischen 0,5 D und 1,5 D auf.

Die erhaltenen CNT-Polymerverbundwerkstoff Granulate können anschließend mit allen bekannten Thermoplastverarbeitungsverfahren weiterverarbeitet werden. Insbesondere können Formkörper durch Spritzguss hergestellt werden.

Die Messung des elektrischen Oberflächenwiderstandes erfolgte wie in Fig. 3 dargestellt. Auf den mit Hilfe der Spritzgusstechnik hergestellten kreisförmigen Probekörper 22 mit einem Durchmesser von 80 mm und einer Dicke von 2 mm werden zwei Leitsilberstreifen 23, 24 aufgebracht, deren Länge B mit ihrem Abstand L übereinstimmt, so dass eine quadratische Fläche sq (Square) definiert wird. Anschließend werden die Elektroden eines Widerstandsmessgerätes 25 auf die Leitsilberstreifen 23, 24 gepresst und der Widerstandswert am Messgerät 25 abgelesen. Als Messspannung wurde bei Widerständen bis 3x10⁷ Ohm/sq 9 Volt verwendet und ab 3x10⁷ Ohm/sq 100 Volt.

### Beispiel 1

Die Einarbeitung von mehrwandigen Kohlenstoffnanoröhrchen (Handelsprodukt: Baytubes® C 150P (CNT hergestellt nach katalytischer Gasphasenabscheidung gemäß WO 2006/050903 A2), Hersteller: Bayer MaterialScience AG) in Polycarbonat (PC) (Handelsprodukt: Makrolon® 2800, Hersteller Bayer MaterialScience AG) erfolgt auf einem Zweiwellenschneckenextruder vom Typ ZSK 26Mc (Coperion Werner & Pfleiderer). In Versuch 1 und 2 werden sowohl das Polymergranulat als auch die CNT über den Haupteinzug bzw. Einfülltrichter 2 in den Extruder dosiert. In Versuch 3 und 4 (Vergleichsversuche) wird das Polymer in den Haupteinzug 2 dosiert und die CNT über einen Seiteneinzug (in Fig. 2 gestrichelt eingezeichnet in Gehäuseteil 16) der Polymerschmelze zugeführt.

Die Prozessparameter sind in der folgenden Tabelle 1 dargestellt.

Die Schmelzetemperatur wird mit einem handelsüblichen Temperatursensor direkt in dem an der Düsenplatte 3 austretenden Schmelzestrang gemessen.

Der spezifische mechanische Energieeintrag wird mittels folgender Gleichung berechnet: Spezif. mechanischer Energieeintrag = 2 * Pi * Drehzahl * Drehmoment der Wellen / Durchsatz

Anzahl und Durchmesser der im Kohlenstoffnanoröhrchen-Polymerverbundwerkstoff enthaltenen nicht vollständig dispergierten CNT-Agglomerate werden mittels eines Lichtmikroskops an einem 5 cm langen Strang aus dem CNT-Polymerverbundwerkstoff gemessen.

**Tabelle 1**

| | | | Vers.-Nr. 1: PC127 | Vers.-Nr. 2: PC128 | Vers.-Nr. 3: PC130 | Vers.-Nr. 4: PC131 |
|---|---|---|---|---|---|---|
| CNT-Anteil | Gew.-% | | 0,2 | 0,2 | 0,2 | 0,2 |
| Durchsatz | kg/h | | 18 | 25 | 18 | 25 |
| Drehzahl | 1/min | | 400 | 600 | 400 | 600 |
| Spezif. mechanischer. Energieeintrag | kWh/kg | | 0.2977 | 0.3133 | 0.2901 | 0.3133 |
| Gehäusetemperatur in Aufschmelzzone | °C | | 240 | 240 | 240 | 240 |
| Schmelztemperatur | °C | | 328 | 346 | 330 | 348 |
| Partikelanzahl im Durchmesserbereich | µm | 0,5 - 10 | 30 | 20 | 80 | 60 |
| | | 10 - 20 | 6 | 3 | 20 | 30 |
| | | 20 - 40 | 2 | 1 | 20 | 30 |
| | | 40 - 60 | 0 | 0 | 0 | 0 |

Es ist eindeutig zu erkennen, dass bei Dosierung der CNT in den Haupteinzug (Versuch 1 und 2) eine wesentlich bessere Dispergierung (= wesentlich weniger CNT-Restagglomerate in allen Größenklassen) erreicht wird als bei Zuführung der CNT in die Polymerschmelze (Versuch 3 und 4). Daraus ergibt sich, dass eine Dispergierung der CNT-Agglomerate durch rein hydrodynamische Kräfte (im Falle von Vergleichsversuchen 3 und 4) unzureichend ist.

### Beispiel 2 (Variation des CNT-Anteils)

Die Einarbeitung von mehrwandigen Kohlenstoffnanoröhrchen (Handelsprodukt: Baytubes® C 150P (CNT hergestellt nach katalyt. Gasphasenabscheidung gemäß WO 2006/050903 A2), Hersteller Bayer MaterialScience AG) in Polycarbonat (PC) (Handelsprodukt: Makrolon® 2800, Hersteller Bayer MaterialScience AG) erfolgt nach dem erfindungsgemäßen Verfahren auf einem Zweiwellenschneckenextruder vom Typ ZSK 26Mc (Coperion Werner & Pfleiderer).

Das Polymergranulat und die CNT werden über den Haupteinzug 2 des Extruders dosiert. Die erhaltenen Granulate werden anschließend zu Probekörpern spritzgegossen und deren elektrischer Oberflächenwiderstand wie in Fig. 3 dargestellt gemessen. Auf die mit Hilfe der Spritzgusstechnik hergestellten kreisförmigen Platten (Probekörper) wurden zwei Leitsilberstreifen aufgebracht, deren Länge B gleich ist wie ihr Abstand L zueinander. Anschließend wurden die Elektroden eines Widerstandsmessgerätes auf die Leitsilberstreifen gepresst und der Widerstandswert am Messgerät abgelesen. Als Messspannung wurde bei Widerständen bis 3x10⁷ Ohm/sq 9 Volt verwendet und ab 3x10⁷ Ohm/sq 100 Volt.

Der Oberflächenwiderstand des reinen Makrolon® 2800 beträgt laut Datenblatt des Herstellers 10¹⁶ Ohm/sq.

Die Prozessparameter und gemessenen Oberflächenwiderstände sind in der folgenden Tabelle 2 dargestellt.

Die minimale Verweilzeit wurde folgendermaßen bestimmt:

Zunächst wurde reines PC extrudiert, bis ein durchsichtiger Strang aus der Düsenplatte 3 austrat. Dann wurde zusätzlich zum PC-Granulat ca. 0,5 g CNT in den Haupteinzug 2 des Extruders dosiert und mit einer Stoppuhr die Zeit gemessen, bis sich der aus der Düsenplatte 3 austretende Schmelzestrang verfärbt. Diese Zeit ist die minimale Verweilzeit.

**Tabelle 2**

| | | Vers.-Nr. 5: PC433 | Vers.-Nr. 6: PC434 | Vers.-Nr. 7: PC435 | Vers.-Nr. 8: PC436 |
|---|---|---|---|---|---|
| CNT-Anteil | Gew.% | 2 | 3 | 5 | 7,5 |
| Durchsatz | kg/h | 26 | 26 | 24 | 22 |
| Drehzahl | 1/min | 400 | 400 | 400 | 400 |
| Spezif. mechanischer. Energieeintrag | kWh/kg | 0,263 | 0,2562 | 0,2849 | 0,3148 |
| Gehäusetemperatur in Aufschmelzzone | °C | 205 | 205 | 205 | 205 |
| Min. Verweilzeit | s | 10,2 | 10,2 | 10,7 | 11,4 |
| Oberflächenwiderstand | Ohm/sq | 1,58 x 10⁵ | 7,74 x 10³ | 2,48 x 10³ | 4,98 x 10² |

### Beispiel 3 (Variation des Energieeintrags)

Die Einarbeitung von mehrwandigen Kohlenstoffnanoröhrchen (Handelsprodukt: Baytubes® C 150P (CNT hergestellt nach katalytischer Gasphasenabscheidung gemäß WO 2006/050903 A2), Hersteller Bayer Technology Services) in Polycarbonat (PC) (Handelsprodukt: Makrolon® 2800, Hersteller Bayer MaterialScience AG) erfolgt nach dem erfindungsgemäßen Verfahren auf einem Zweiwellenschneckenextruder vom Typ ZSK 26Mc (Coperion Werner & Pfleiderer).

Das Polymergranulat und die CNT werden über den Haupteinzug 2 des Extruders dosiert. Die erhaltenen Granulate werden anschließend zu Probekörpern spritzgegossen und deren elektrischer Oberflächenwiderstand wie in Fig. 3 dargestellt gemessen.

Die Prozessparameter und gemessenen Oberflächenwiderstände sind in der folgenden Tabelle 3 dargestellt.

**Tabelle 3**

| | | Vers.-Nr. 9: PC415 | Vers.-Nr. 10: PC408 | Vers.-Nr. 11: PC409 | Vers.-Nr. 12: PC410 | Vers.-Nr. 13: PC396 |
|---|---|---|---|---|---|---|
| CNT-Anteil | Gew.-% | 5 | 5 | 5 | 5 | 5 |
| Durchsatz | kg/h | 24 | 27 | 18 | 9 | 3 |
| Drehzahl | l/min | 400 | 600 | 600 | 600 | 200 |
| Spezif. mechanischer Energieeintrag | kWh/kg | 0.2849 | 0.296 | 0,3848 | 0,592 | 0,7252 |
| Gehäusetemperatur in Aufschmelzzone | °C | 205 | 205 | 205 | 205 | 205 |
| Min. Verweilzeit | s | 10,7 | 8,9 | 12,1 | 23 | 73 |
| Oberflächenwiderstand | Ohm/sq | 6,45 x 10³ | 3,65 x 10³ | 2 x 10³ | 1,83 x 10³ | 5,13 x 10³ |

Es ist zu erkennen, dass der Widerstand mit zunehmendem Energieeintrag zunächst sinkt, und dann aber bei hohem Energieeintrag nicht wie erwartet durch CNT-Zerkleinerung deutlich ansteigt, sondern noch unter dem Niveau bei niedrigem Energieeintrag bleibt (Versuch 9).

### Beispiel 4 (Variation des CNT-Anteils)

Die Einarbeitung von mehrwandigen Kohlenstoffnanoröhrchen (Handelsprodukt: Baytubes® C 150P (CNT hergestellt nach katalyt. Gasphasenabscheidung gemäß WO 2006/050903 A2), Hersteller: Bayer MaterialScience AG) in Polybutylenterephthalat (PBT) (Handelsprodukt: Pocan® B 1600, Hersteller Lanxess Deutschland GmbH) erfolgt nach dem erfindungsgemäßen Verfahren auf einem Zweiwellenschneckenextruder vom Typ ZSK 26Mc (Coperion Werner & Pfleiderer).

Das Polymergranulat und die CNT werden über den Haupteinzug 2 des Extruders dosiert. Die erhaltenen Granulate werden anschließend zu Probekörpern spritzgegossen und deren elektrischer Oberflächenwiderstand wie in Fig. 3 dargestellt gemessen.

Der Oberflächenwiderstand des reinen Pocan® B 1600 beträgt laut Campus Datenbank >10¹⁵ Ohm/sq.

Die Prozessparameter und gemessenen Oberflächenwiderstände sind in der folgenden Tabelle 4 dargestellt.

**Tabelle 4**

| | | Vers.-Nr. 14: PBT2 | Vers.-Nr. 15: PBT3 | Vers.-Nr. 16: PBT4 | Vers.-Nr. 17: PBT5 |
|---|---|---|---|---|---|
| CNT-Anteil | Gew.% | 2 | 3 | 5 | 7,5 |
| Durchsatz | kg/h | 15 | 17 | 19 | 19 |
| Drehzahl | l/min | 400 | 400 | 400 | 400 |
| Spezif. mechanischer. Energieeintrag | kWh/kg | 0.4440 | 0.3917 | 0.3692 | 0.3692 |
| Gehäusetemperatur in Aufschmelzzone | °C | 205 | 205 | 205 | 205 |
| Min. Verweilzeit | s | 16,1 | 15,7 | 14,2 | 14,2 |
| Oberflächenwiderstand | Ohm/sq | 1.46 x 10⁸ | 2.24 x 10⁵ | 7.61 x 10² | 9.33 x 10¹ |

### Beispiel 5 (Variation des CNT-Anteils)

Die Einarbeitung von mehrwandigen Kohlenstoffnanoröhrchen (Handelsprodukt: Baytubes® C 150P (CNT hergestellt nach katalyt. Gasphasenabscheidung gemäß WO 2006/050903 A2), Hersteller: Bayer MaterialScience AG) in Polyamid 6 (PA 6) (Handelsprodukt: Durethan® B 29, Hersteller Lanxess Deutschland GmbH) erfolgt nach dem erfindungsgemäßen Verfahren auf einem Zweiwellenschneckenextruder vom Typ ZSK 26Mc (Coperion Werner & Pfleiderer).

Das Polymergranulat und die CNT werden über den Haupteinzug 2 des Extruders dosiert. Die erhaltenen Granulate werden anschließend zu Probekörpern spritzgegossen und deren elektrischer Oberflächenwiderstand wie in Fig. 3 dargestellt gemessen.

Der Oberflächenwiderstand des reinen Durethan® B 30, welches vergleichbar zu dem verwendeten Durethan® B 29 ist, beträgt laut Campus Datenbank 10¹³ Ohm/sq.

Die Prozessparameter und gemessenen Oberflächenwiderstände sind in der folgenden Tabelle 5 dargestellt.

**Tabelle 5**

| | | Vers.-Nr. 18: PA58 | Vers.-Nr. 19: PA59 | Vers.-Nr. 20: PA60 |
|---|---|---|---|---|
| CNT-Anteil | Gew.-% | 3 | 5 | 7,5 |
| Durchsatz | kg/h | 24 | 22 | 21 |
| Drehzahl | l/min | 400 | 400 | 400 |
| Spezif. mechanischer. Energieeintrag | kWh/kg | 0.2812 | 0.3027 | 0.3213 |
| Gehäusetemperatur in Aufschmelzzone | °C | 190 | 190 | 190 |
| Min. Verweilzeit | s | 10,7 | 11,4 | 11,7 |
| Oberflächenwiderstand | Ohm/sq | >1.00 x 10¹¹ | 1.53 x 10⁶ | 6.16 x 10⁵ |

## Patentansprüche

1. Verfahren zur Herstellung eines leitfähigen Kohlenstoffnanoröhrchen-Polymerverbundwerkstoffs, bei dem Kohlenstoffnanoröhrchen und thermoplastisches Polymer in einem doppelwelligen Schneckenextruder oder Ringextruder oder Planetwalzenextruder oder Ko-Kneter mit gleichsinnig rotierenden, nicht konischen Wellen gemischt und anschließend extrudiert werden, **dadurch gekennzeichnet, dass**
a) die Kohlenstoffnanoröhrchen zusammen mit dem Polymer bzw. den Polymeren und ggf. Additiven in fester Phase dem Haupteinzug (2) des Schneckenextruders (1) zugeführt werden, die Kohlenstoffnanoröhrchen in der Einzugszone (12, 13) durch Feststoffreibung unter Bildung einer Feststoffmischung vordispergiert werden und in der Aufschmelzzone (14, 15) überwiegend durch hydrodynamische Kräfte weiter dispergiert werden, und
b) die resultierende Mischung in mindestens einer weiteren Zone (16, 17, 18, 19) des Schneckenextruders (1) weiter nachdispergiert und die Kohlenstoffnanoröhrchen in der Polymerschmelze homogen verteilt werden
und dass der spezifische mechanische Energieeintrag im Schneckenextruder (1) auf einen Wert im Bereich von 0,1 kWh/kg bis 1 kWh/kg und die minimale Verweilzeit auf einen Wert im Bereich von 6 s bis 90 s eingestellt werden.

2. Verfahren nach Anspruch 1, **dadurch gekennzeichnet, dass** der spezifische mechanische Energieeintrag im Schneckenextruder (1) im Bereich von 0,2 kWh/kg bis 0,6 kWh/kg und die minimale Verweilzeit im Bereich von 8 s bis 30 s eingestellt werden.

3. Verfahren nach Anspruch 1, **dadurch gekennzeichnet, dass** mehrwandige (multiwalled) Kohlenstoffnanoröhrchen verwendet werden.

4. Verfahren nach Anspruch 1 - 3, **dadurch gekennzeichnet, dass** Kohlenstoffnanoröhrchen mit einem Verhältnis von Länge zu Außendurchmesser von größer 5 verwendet werden.

5. Verfahren nach einem der Ansprüche 1 bis 4, **dadurch gekennzeichnet, dass** die Kohlenstoffnanoröhrchen als Agglomerate eingesetzt werden.

6. Verfahren nach einem der Ansprüche 1 bis 5, **dadurch gekennzeichnet, dass** die Kohlenstoffnanoröhrchen einen mittleren Durchmesser von 3 bis 100 nm aufweisen.

7. Verfahren nach einer der Ansprüche 1 bis 6, **dadurch gekennzeichnet, dass** das thermoplastische Polymer wenigstens eines aus der Reihe Polycarbonat, Polyamid, Polyester, insbesondere Polybutylenterephthalat und Polyethylenterephthalat, Polyether, thermoplastisches Polyurethan, Polyacetal, Fluorpolymer, Polyethersulfone, Polyolefin, Polyimid, Polyacrylat, Polyphenylenoxid, Polyphenylensulfid, Polyetherketon, Polyaryletherketon, Styrolpolymerisate, Styrolcopolymere, Acrylatkautschuk (ASA), Acrylnitrilbutadienstyrolblockcopolymere und Polyvinylchlorid ist.

8. Kohlenstoffnanoröhrchen-Polymerverbundwerkstoff erhalten aus einem Verfahren gemäß einem der Ansprüche 1 bis 7.

9. Verwendung des Kohlenstoffnanoröhrchen-Polymerverbundwerkstoff nach Anspruch 8 zur Herstellung von Formkörpern.

## Claims

1. Process for producing a conductive carbon nanotube-polymer composite, in which the carbon nanotubes and thermoplastic polymer are mixed in a twin-screw extruder or ring extruder or planetary gear extruder or Ko-Knetr having corotating, nonconical screws and subsequently extruded, **characterized in that**
a) the carbon nanotubes are fed together with the polymer or polymers and optionally additives in the solid phase into the main intake (2) of the screw extruder (1), the carbon nanotubes are predispersed by solids friction in the feed zone (12, 13) to form a solids mixture and are dispersed further predominantly by means of hydrodynamic forces in the homogenizing section (14, 15) and
b) the resulting mixture is after-dispersed further in at least one further zone (16, 17, 18, 19) of the screw extruder (1) and the carbon nanotubes are homogeneously distributed in the polymer melt
and **in that** the specific mechanical energy input in the screw extruder (1) is set to a value in the range from 0.1 kWh/kg to 1 kWh/kg and the minimum residence time is set to a value in the range from 6 s to 90 s.

2. Process according to Claim 1, **characterized in that** the specific mechanical energy input in the screw extruder (1) is set in the range from 0.2 kWh/kg to 0.6 kWh/kg and the minimum residence time is set in the range from 8 s to 30 s.

3. Process according to Claim 1, **characterized in that** multiwalled carbon nanotubes are used.

4. Process according to Claims 1-3, **characterized in that** carbon nanotubes having a ratio of length to external diameter of greater than 5 are used.

5. Process according to any of Claims 1 to 4, **characterized in that** the carbon nanotubes are used as agglomerates.

6. Process according to any of Claims 1 to 5, **characterized in that** the carbon nanotubes have an average diameter of from 3 to 100 nm.

7. Process according to any of Claims 1 to 6, **characterized in that** the thermoplastic polymer is at least one polymer selected from the group consisting of polycarbonate, polyamide, polyester, in particular polybutylene terephthalate and polyethylene terephthalate, polyether, thermoplastic polyurethane, polyacetal, fluoropolymer, polyether sulfone, polyolefin, polyimide, polyacrylate, polyphenylene oxide, polyphenylene sulphide, polyether ketone, polyaryl ether ketone, styrene polymers, styrene copolymers, acrylate rubber (ASA), acrylonitrile-butadiene-styrene block copolymers and polyvinyl chloride.

8. Carbon nanotube-polymer composite obtained from a process according to any of Claims 1 to 7.

9. Use of the carbon nanotube-polymer composite according to Claim 8 for producing mouldings.

## Revendications

1. Procédé pour la production d'un matériau composite polymère-nanotubes de carbone conducteur, dans lequel des nanotubes de carbone et un polymère thermoplastique sont mélangés dans une extrudeuse à vis à double arbre ou une extrudeuse annulaire ou une extrudeuse à cylindres planétaires ou un malaxeur Ko à arbres non coniques tournant dans le même sens, et ensuite extrudés, **caractérisé en ce que**
a) les nanotubes de carbone sont envoyés conjointement avec le polymère ou les polymères et éventuellement des additifs en phase solide à la trémie principale (2) de l'extrudeuse à vis (1), les nanotubes de carbone sont pré-dispersés dans la zone d'entrée (12, 13) par frottement de solides et formation d'un mélange de solides et dispersés davantage essentiellement par des forces hydrodynamiques dans la zone de fusion (14, 15), et
b) le mélange résultant est post-dispersé davantage dans au moins une autre zone (16, 17, 18, 19) de l'extrudeuse à vis (1) et les nanotubes de carbone sont répartis de façon homogène dans la masse fondue de polymère,
et **en ce qu'**on ajuste l'apport spécifique d'énergie mécanique dans l'extrudeuse à vis (1) à une valeur dans la plage de 0,1 kWh/kg à 1 kWh/kg et le temps minimum de séjour à une valeur dans la plage de 6 s à 90 s.

2. Procédé selon la revendication 1, **caractérisé en ce qu'**on ajuste l'apport spécifique d'énergie mécanique dans l'extrudeuse à vis (1) dans la plage de 0,2 kWh/kg à 0,6 kWh/kg et le temps minimum de séjour à une valeur dans la plage de 8 s à 30 s.

3. Procédé selon la revendication 1, **caractérisé en ce qu'**on utilise des nanotubes de carbone à plusieurs parois (multiwalled).

4. Procédé selon l'une quelconque des revendications 1 à 3, **caractérisé en ce qu'**on utilise des nanotubes de carbone ayant un rapport de longueur à diamètre externe supérieur à 5.

5. Procédé selon l'une quelconque des revendications 1 à 4, **caractérisé en ce que** les nanotubes de carbone sont utilisés sous forme d'agglomérats.

6. Procédé selon l'une quelconque des revendications 1 à 5, **caractérisé en ce que** les nanotubes de carbone ont un diamètre moyen de 3 à 100 nm.

7. Procédé selon l'une quelconque des revendications 1 à 6, **caractérisé en ce que** le polymère thermoplastique est au moins un polymère choisi dans la série constituée par le polycarbonate, un polyamide, un polyester, en particulier le poly(butylène-téréphtalate) et le poly(éthylène-téréphtalate), un polyéther, le polyuréthanne thermoplastique, un polyacétal, un polymère fluoré, des polyéthersulfones, une polyoléfine, un polyimide, le polyacrylate, le polyoxyphénylène, le poly(sulfure de phénylène), une polyéthercétone, une polyaryléthercétone, des polymères de styrène, des copolymères de styrène, un caoutchouc acrylate (ASA), des copolymères séquencés acrylonitrile/butadiène/styrène et le poly(chlorure de vinyle).

8. Matériau composite polymère-nanotubes de carbone, obtenu par un procédé selon l'une quelconque des revendications 1 à 7.

9. Utilisation du matériau composite polymère-nanotubes de carbone selon la revendication 8, pour la production de corps moulés.
